# EUROPÄISCHE PATENTANMELDUNG

(11) **EP 1 385 136 A2**
(43) Veröffentlichungstag der Anmeldung: **28.01.2004**
(21) Anmeldenummer: 03016918.9
(22) Anmeldetag: 24.07.2003
(51) Int. Cl.: G09G 3/20, B60P 3/32, G01D 7/00

(54) **Anzeigevorrichtung zur Verwendung in Wohnmobilen und Wohnwagen**

(30) Priorität: 26.07.2002 DE 20211319 U
(71) Anmelder: Reich KG, Regel- und Sicherheitstechnik, 35713 Eschenburg-Wissenbach (DE)
(72) Erfinder: Bender, Steffen, 35745 Herborn (DE)
(74) Vertreter: Hofstetter, Alfons J., Dr.rer.nat.

(57) **Zusammenfassung**

Die vorliegende Erfindung betrifft eine Anzeigevorrichtung zur Verwendung in Wohnmobilen und Wohnwagen mit mindestens einer Anzeigefläche (12) und mindestens einem Bedienungselement (14) zur Auswahl der Anzeige und/oder zur Eingabe mindestens eines Datenwerts, wobei der Datenwert mindestens einen zeitlich vorhergehenden, aktuellen oder gewünschten Betriebszustand von Elementen oder Umgebungsparametern inner- oder außerhalb des Wohnmobils oder Wohnwagens darstellt, wobei die Anzeigevorrichtung (10) mindestens eine Speichereinheit zum Speichern von Daten aufweist und programmierbar ausgebildet ist.

## Beschreibung

Die vorliegende Erfindung betrifft eine Anzeigevorrichtung zur Verwendung in Wohnmobilen und Wohnwagen mit mindestens einer Anzeigefläche und mindestens einem Bedienungselement zur Auswahl der Anzeige und/oder zur Eingabe mindestens eines Datenwerts, wobei der Datenwert mindestens einen zeitlich vorhergehenden, aktuellen oder gewünschten Betriebszustand von Elementen oder Umgebungsparametern inner- oder außerhalb des Wohnmobils oder Wohnwagens darstellt.

Derartige Anzeigevorrichtungen sind aus dem Stand der Technik bekannt und dienen zur Anzeige von Betriebszuständen in Wohnmobilen und Wohnwagen, zum Beispiel zur Überprüfung des Ladezustandes von Batterien, der Überwachung der Prüfstände diverser Flüssigkeitstanks, zur Anzeige der Innen- und Außentemperatur oder auch zur Anzeige weiterer Werte und Daten, die über übliche Sensoren ermittelt werden. Es handelt sich dabei um analoge oder digitale Anzeigen.

Die bekannten Anzeigevorrichtungen weisen jedoch den Nachteil auf, dass es sich um sogenannte "custom-made"-Anzeigen handelt, deren Displays bzw. Anzeigen in der Orientierung, Form, der Art der verwendeten Symbole, Zahlen, etc. festgelegt ist. Sie sind daher in ihrer Verwendung unflexibel und eingeschränkt.
Es ist daher Aufgabe der vorliegenden Erfindung, eine Anzeigevorrichtung der eingangs genannten Art bereitzustellen, welche vielseitig verwendbar ist.

Zur Lösung dieser Aufgabe dienen die Merkmale des unabhängigen Anspruches.

Vorteilhafte Ausgestaltungen sind in den Unteransprüchen beschrieben.

Eine erfindungsgemäße Anzeigevorrichtung ist weist mindestens eine Speichereinheit zum Speichern von Daten auf und ist programmierbar ausgebildet. Durch die Möglichkeit der Speicherung von Daten und die programmierbare Ausgestaltung der Anzeigevorrichtung ist es möglich, diese vielseitig zu verwenden. Insbesondere kann dabei die Anzeigevorrichtung Programme zum Speichern, Abrufen, Bearbeiten und graphischen Aufbereitung und Darstellung der Daten und Werte von Betriebszuständen von Elementen oder Umgebungsparametern inneroder außerhalb des Wohnmobils oder Wohnwagens aufweisen. Des weiteren ist es möglich mindestens einen Datenwert, der mindestens einen zeitlich vorhergehenden, aktuellen oder gewünschten Betriebszustand darstellt, einzustellen. Aufgrund der Flexibilität der erfindungsgemäßen Anzeigevorrichtung kann diese zum Abruf von Datenbanken, digitalisierten Handbüchern und für den Zugang zum Internet ausgebildet sein.

In einer weiteren vorteilhaften Ausgestaltung der Erfindung weist die Anzeigevorrichtung eine Zeitschaltfunktion zur zeitlichen Steuerung der Strombelegung einzelner Stromquellen oder elektrischer Verbraucher des Wohnmobils oder Wohnwagens auf. Die Anzeigevorrichtung kann zudem eine Alarmfunktion zur Anzeige kritischer Betriebszustände oder Umgebungsparameter in- oder außerhalb des Wohnmobils oder Wohnwagens aufweisen. In diesem Zusammenhang kann die Anzeigevorrichtung mit einem Gas- und/oder Temperaturund/oder Rauchsensor und/oder mindestens einem Flüssigkeitsmessgerät verbunden sein. Des weiteren ist es möglich, dass die Anzeigevorrichtung einen programmierbaren Tiefentladungsschutz der in dem Wohnmobil oder Wohnwagen angeordneten Stromquellen aufweist. In einer weitern vorteilhaften Ausgestaltung weist die Anzeigevorrichtung eine Überwachungsanzeige zur Überwachung der Schließstellung von Türen, Fenstern und sonstigen am Wohnmobil oder Wohnwagen ausgebildeten Klappen auf. So kann zum Beispiel ein Losfahren des Wohnmobils bei noch geöffneter Tür verhindert werden.

In einer weiteren vorteilhaften Ausgestaltung der Erfindung ist die Anzeigevorrichtung drehbar befestigbar ausgebildet. Zudem ist die Position und Orientierung der auf der Anzeigefläche dargestellten Daten, Werte und graphischen Darstellungen einstellbar. Dadurch ist gewährleistet, dass die Anzeigevorrichtung in jeder Position innerhalb des Wohnmobils oder Wohnwagens einbaubar ist.

In einer weiteren vorteilhaften Ausgestaltung der Erfindung ist die Anzeigevorrichtung in datenübertragender Weise mit einem Anschlusskontakt mindestens einer Anschlussvorrichtung lösbar verbunden, wobei die Anschlussvorrichtung in datenübertragender Weise mit mindestens einer Vorrichtung zum Anschluss von Stromquellen und elektrischen Verbrauchern in dem Wohnmobil oder Wohnwagen verbunden ist. Durch die lösbare Verbindung der Anzeigevorrichtung mit mindestens einem Anschlusskontakt einer Anschlussvorrichtung ist gewährleistet, dass inner- oder außerhalb des Wohnmobils oder Wohnwagens jeweils an geeigneter Stelle eine entsprechende Anschlussvorrichtung angeordnet werden kann, über die dann die Anzeigevorrichtung betätig wird. Insbesondere ist es möglich, im Bereich der Fahrerkonsole eine Anschlussvorrichtung für die Anzeigevorrichtung anzubringen. Es ist daher für den Fahrer eines Wohnmobils zum Beispiel möglich, während der Fahrt bestimmte Betriebszustände seines Wohnmobils abzurufen. Insbesondere ist ihm der jederzeitige Abruf aller relevanten Betriebszustände innerhalb des Wohnmobils oder des Wohnwagens möglich. Da die Anschlussvorrichtung bzw. die Anschlussvorrichtungen mit einer oder mehreren zentralen Vorrichtungen zum Anschluss der Stromquellen und der elektrischen Verbraucher des Wohnmobils oder Wohnwagens verbunden ist, kann auf die bisher üblichen Anzeigevorrichtungen, die jeweils nur eine begrenzte Anzahl von Betriebszuständen oder Parametern angezeigt haben und die darüber hinaus innerhalb des Wohnmobils oder Wohnwagens an unterschiedlichen Stellen angebracht wurden, verzichtet werden. Es ist aus Bequemlichkeitsgründen aber auch möglich, mehrere Anschlussvorrichtungen in oder am Wohnmobil oder Wohnwagen anzubringen, die jeweils mit der Anzeigevorrichtung den Zugriff auf alle relevanten Daten des Wohnmobils oder Wohnwagens erlauben. Die Anschlussvorrichtungen müssen dabei jeweils nur mit der oder den Vorrichtungen zum Anschluss von Stromquellen und elektrischen Verbrauchern verbunden werden. Es ist aber auch möglich, dass die Anzeigevorrichtung direkt in datenübertragender Weise mit mindestens einer Vorrichtung zum Anschluss von Stromquellen und elektrischen Verbrauchern in dem Wohnmobil oder Wohnwagen verbunden ist.

In einer weiteren vorteilhaften Ausgestaltung der Erfindung weisen die Anzeigevorrichtung und/oder die Anschlussvorrichtung und/oder die Vorrichtung zum Anschluss von Stromquellen und elektrischen Verbrauchern jeweils eine Sende- und/oder Empfangseinheit zur Übertragung und/oder zum Empfang von Daten auf. Dadurch ist es vorteilhafterweise möglich, auch ohne den direkten Kontakt zwischen der Anschlussvorrichtung, der Anzeigevorrichtung und/oder der Vorrichtung zum Anschluss von Stromquellen und elektrischen Verbrauchern, Daten auszutauschen. Dies bedeutet, dass die Betriebszustände oder andere Parameter auch außerhalb des Wohnmobils oder Wohnwagens jederzeit abrufbar sind. Hierzu ist die Anzeigevorrichtung vorteilhafterweise tragbar ausgebildet. Die Anzeigevorrichtung kann dabei auch aus einem Laptop-Computer, einem PDA-Computer, einem Palm-Computer, einem Handheld-Computer, einem Organizer oder einem tragbaren Telefon bestehen. Zudem kann gegebenenfalls auf eine aufwendige Verkabelung der Anschlussvorrichtungen im Wohnmobil oder Wohnwagen verzichtet werden.

In einer weiteren vorteilhaften Ausgestaltung der Erfindung ist das Bedienungselement der Anzeigevorrichtung als multifunktioneller Dreh-/Drückschalter ausgebildet. Durch ein derart ausgestaltetes Bedienungselement ist eine leichte Bedienung der Anzeigevorrichtung möglich. Zudem können mit einem derartigen Bedienungselement alle Funktionen der Anzeigevorrichtung durchgeführt werden.

Weitere Einzelheiten, Merkmale und Vorteile der Erfindung ergeben sich aus der folgenden Beschreibung eines zeichnerisch dargestellten Ausführungsbeispiels. Es zeigen
- Figur 1: eine schematische Darstellung einer erfindungsgemäßen Anzeigevorrichtung, und
- Figur 2: eine weitere schematische Darstellung der erfindungsgemäßen Anzeigevorrichtung.

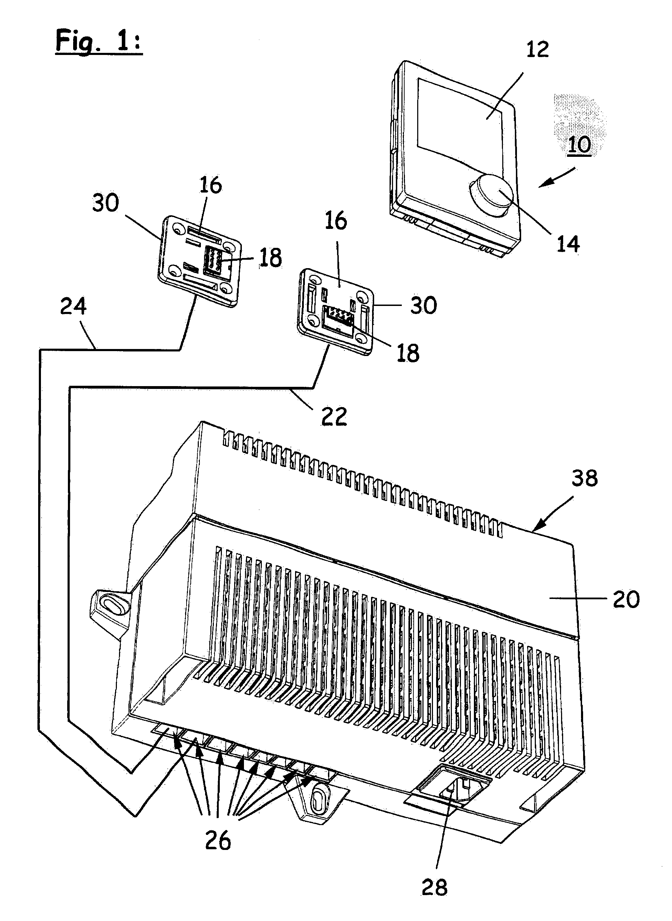

Figur 1 zeigt eine Anzeigevorrichtung 10 zur Verwendung in Wohnmobilen und Wohnwagen. Die Anzeigevorrichtung 10 weist eine Anzeigefläche 12 bestehend aus einem LCD-Bildschirm sowie ein Bedienungselement 14 zur Auswahl der Anzeige und/oder zur Eingabe mindestens eines Datenwerts, wobei der Datenwert mindestens einen zeitlich vorhergehenden, aktuellen oder gewünschten Betriebszustand von Elementen oder Umgebungsparametern inner- oder außerhalb des Wohnmobils oder Wohnwagens darstellt. Das Bedienungselement 14 ist dabei als multifunktioneller Dreh-/Drückschalter ausgebildet.

Die Anzeigevorrichtung 10 weist mindestens eine Speichereinheit (nicht dargestellt) zum Speichern von Daten sowie elektronische Bauelemente (nicht dargestellt) auf, wie eine Programmierung der Anzeigevorrichtung 10 erlauben. Dadurch kann die Anzeigevorrichtung 10 Programme zum Speichern, Abrufen, Bearbeiten und graphischen Aufbereitung und Darstellung der Daten und Werte von Betriebszuständen von Elementen oder Umgebungsparametern inner- oder außerhalb des Wohnmobils oder Wohnwagens aufweisen. Zudem wird dadurch ermöglicht, dass die Anzeigevorrichtung 10 zum Abruf von Datenbanken, digitalisierten Handbüchern und für den Zugang zum Internet ausgebildet ist. Bei den digitalisierten Handbüchern kann es sich dabei um Handbücher zum Betrieb des Wohnmobils oder Wohnwagens oder entsprechender elektrischer Verbraucher handeln. Die Anzeigevorrichtung 10 weist zudem eine Zeitschaltfunktion zur zeitlichen Steuerung der Strombelegung einzelner Stromquellen oder elektrischer Verbraucher des Wohnmobils oder Wohnwagens auf. Eine Alarmfunktion zur Anzeige kritischer Betriebszustände oder Umgebungsparameter in- oder außerhalb des Wohnmobils oder Wohnwagens ist ebenfalls vorgesehen. So kann die Anzeigevorrichtung 10 mit einem Gas- und/oder Temperatur- und/oder Rauchsensor und/oder Flüssigkeitsmessgerät (nicht dargestellt) verbunden sein. Bei dem Erreichen kritischer Gas-, Temperatur- oder Rauchwerte gibt die Anzeigevorrichtung 10 ein akustisches und/oder optisches Warnsignal ab. Die Anzeigevorrichtung 10 kann zudem die Uhrzeit, das Datum, den Ladezustand einer oder mehrerer Batterien des Wohnmobils oder Wohnwagens, die Flüssigkeitsstände der unterschiedlichen in einem Wohnmobil oder Wohnwagen angeordneten Flüssigkeitstanks sowie weitere Betriebszustände der unterschiedlichen elektrischen Verbraucher anzeigen. Es können zum Beispiel optische und/oder akustische Warnsignale beim Erreichen eines vordefinierten Flüssigkeitsstands im Abwasser- und Frischwassertank erzeugt werden. Des weiteren kann die Anzeigevorrichtung 10 einen programmierbaren Tiefentladungsschutz der in dem Wohnmobil oder Wohnwagen angeordneten Stromquellen aufweisen. So können unterschiedliche Warnsignale bei einem Unterschreiten vordefinierter Spannungsstufen abgegeben werden. Zudem kann bei den einzelnen Warnstufen ein vollständiges oder teilweises Abschalten der elektrischen Verbraucher im Wohnwagen oder Wohnmobil erfolgen. Das Abschalten erfolgt dabei software-gesteuert. Ein vollständiges Abschalten aller elektrischen Verbraucher kann ein zusätzliches mechanische Abschalten beinhalten. Ein vollständige Abschaltung der Verbraucher erfolgt üblicherweise bei einem Spannungsabfall unter 10,0 V. Weiterhin ist es möglich, dass die Anzeigevorrichtung 10 eine Überwachungsanzeige (nicht dargestellt) zur Überwachung der Schließstellung von Türen, Fenstern und sonstigen am Wohnmobil oder Wohnwagen ausgebildeten Klappen aufweist. Der Schließzustand der Türen, Fenster oder Klappen kann dabei mittels Reed-Kontakten ermittelt und angezeigt werden.

Ist die Anzeigevorrichtung 10 mit einem Gasinhaltsmesser (nicht dargestellt) verbunden, so kann auch der Gasinhalt einer oder mehrerer Gasflaschen angezeigt werden. Schließlich ist es möglich, dass die Anzeigevorrichtung in unterschiedlichen Sprachen programmiert ist. Zur Energieeinsparung ist auch möglich, dass die Anzeigevorrichtung einen Screen-Saver aufweist.

Die Anzeigevorrichtung 10 kann drehbar befestigbar ausgebildet sein. Zugleich ist die Position und Orientierung der auf der Anzeigefläche 12 angezeigten Daten, Werte und graphischen Darstellungen einstellbar beziehungsweise programmierbar.

Des weiteren erkennt man, dass die Anzeigevorrichtung 10 lösbar mit einem jeweiligen Anschlusskontakt 18 der beiden dargestellten Anschlussvorrichtungen 16 in datenübertragender Weise verbunden ist. Die Anschlussvorrichtungen 16 sind dabei als Anschlussplatte 30 ausgebildet. Die Anschlussplatte 30 ist in das Gehäuse der Anzeigevorrichtung 10, insbesondere auf der der Anzeigefläche 12 gegenüberliegenden Seite des Gehäuses einsteckbar. Man erkennt, dass die Anschlussvorrichtungen 16 jeweils in datenübertragender Weise über Anschlussleitungen 23, 24 mit einer Vorrichtung 20 zum Anschluss von Stromquellen und elektrischen Verbrauchern in dem Wohnmobil oder Wohnwagen verbunden sind. Hierzu weist die Vorrichtung 20 Anschlüsse 26 auf, die als Ein- und Ausgänge für verschiedene Anschlussleitungen, wie zum Beispiel den Anschlussleitungen 22, 24 dienen. Es ist aber auch möglich, dass die Anschlüsse 26 zum Anschluss verschiedener Sensoren, wie zum Beispiel für Sensoren zum Messen von Tankinhalten, Gassensoren, Temperatursensoren, Drucksensoren, Rauchsensoren oder Ähnliches verwendet werden. Zur Stromversorgung weist die Vorrichtung 20 einen Anschluss 28 auf. Man erkennt, dass das Gehäuse 20 des weiteren eine Vielzahl von Lüftungsschlitzen aufweist, die zur Vermeidung der Überhitzung der Vorrichtung 20 dienen.

Es ist aber auch möglich, dass die Anzeigevorrichtung 10 in datenübertragender Weise direkt mit der Vorrichtung zum Anschluss von Stromquellen und elektrischen Verbrauchern 20 in dem Wohnmobil oder Wohnwagen verbunden ist (nicht dargestellt).

Die Anschlussvorrichtungen 16 können jeder beliebigen Stelle innerhalb oder auβerhalb des Wohnmobils oder Wohnwagens angeordnet werden. Insbesondere wird eine Anschlussvorrichtung 16 im Bereich der Fahrerkonsole des Wohnmobils angeordnet, so dass der Fahrer des Wohnmobils jederzeit in der Lage ist, Daten über die Betriebszustände oder andere Parameter in und außerhalb des Wohnmobils abzurufen. Die Verbindung der Anzeigevorrichtung 10 mit den jeweiligen Anschlussvorrichtungen 16 ist als Steckverbindung ausgebildet. Des weiteren ist es möglich, dass die Anzeigevorrichtung 10, die Anschlussvorrichtung 16 und/oder die Vorrichtung 20 jeweils eine Sende- und/oder Empfangseinheit zur Übertragung und/oder zum Empfang von Daten autweisen.

Die dargestellte Anzeigevorrichtung ist tragbar ausgebildet. Es ist zudem möglich, dass die Anzeigevorrichtung 10 ein Laptop-Computer, ein PDA-Computer, ein Palm-Computer, ein Handheld-Computer, ein Organzier oder ein tragbares Telefon ist.

Die Anzeigevorrichtung 10 kann zudem derart ausgebildet sein, dass bei einer Trennung von Anzeigevorrichtung 10 und Anschlussvorrichtung 16 die Vorrichtung 20 nicht aktivierbar ist. Die Anzeigevorrichtung 10 kann aber auch über die Vorrichtung 20 mit einer Wegfahrsperre (nicht dargestellt) des Wohnmobils verbunden sein.

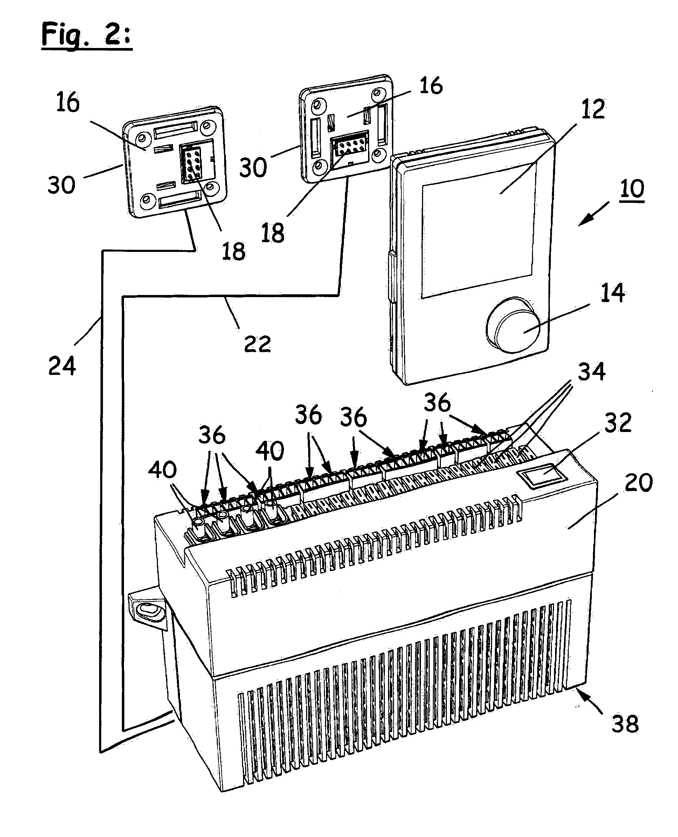

Figur 2 zeigt eine weitere schematische Darstellung der Anzeigevorrichtung 10. Man erkennt, dass die Vorrichtung 20 weitere Anschlussstellen 36 aufweist. Die Anschlussstellen 36 können dabei als Anschlüsse bzw. Ein- und Ausgänge für alle stromverbrauchenden Elemente eines Wohnmobils oder Wohnwagens dienen. Insbesondere dienen sie als Anschlüsse für sogenannte 12 V-Verbraucher, wie zum Beispiel Lichtanlagen, Kühlschränke, Fernseher, Radios und Ähnliches.

Zudem weist die Vorrichtung 20 Anschlüsse 40 zum Anschluss von mindestens zwei Batterien auf. Zur Sicherung der einzelnen Stromkreise ist zudem eine Sicherungssteckleiste 34 zum Einfügen entsprechender Sicherungen ausgebildet. Zum Ein- bzw. Ausschalten der Vorrichtung 20 dient ein Schalter 32.

## Patentansprüche

1. Anzeigevorrichtung zur Verwendung in Wohnmobilen und Wohnwagen mit mindestens einer Anzeigefläche (12) und mindestens einem Bedienungselement (14) zur Auswahl der Anzeige und/oder zur Eingabe mindestens eines Datenwerts, wobei der Datenwert mindestens einen zeitlich vorhergehenden, aktuellen oder gewünschten Betriebszustand von Elementen oder Umgebungsparametern inner- oder außerhalb des Wohnmobils oder Wohnwagens darstellt,
**dadurch gekennzeichnet,**
**dass** die Anzeigevorrichtung (10) mindestens eine Speichereinheit zum Speichern von Daten aufweist und programmierbar ausgebildet ist.

2. Anzeigevorrichtung nach Anspruch 1,
**dadurch gekennzeichnet,**
**dass** die Anzeigevorrichtung (10) in datenübertragender Weise lösbar mit einem Anschlusskontakt (18) mindestens einer Anschlussvorrichtung (16) verbunden ist, wobei die Anschlussvorrichtung (16) in datenübertragender Weise mit mindestens einer Vorrichtung zum Anschluss von Stromquellen und elektrischen Verbrauchern (20) in dem Wohnmobil oder Wohnwagen verbunden ist.

3. Anzeigevorrichtung nach Anspruch 1,
**dadurch gekennzeichnet,**
**dass** die Anzeigevorrichtung (10) in datenübertragender Weise mit mindestens einer Vorrichtung zum Anschluss von Stromquellen und elektrischen Verbrauchern (20) in dem Wohnmobil oder Wohnwagen verbunden ist.

4. Anzeigevorrichtung nach Anspruch 1, 2 oder 3,
**dadurch gekennzeichnet,**
**dass** die Anzeigevorrichtung (10) Programme zum Speichern, Abrufen, Bearbeiten und graphischen Aufbereitung und Darstellung der Daten und Werte von Betriebszuständen von Elementen oder Umgebungsparametern inner- oder außerhalb des Wohnmobils oder Wohnwagens aufweist.

5. Anzeigevorrichtung nach einem der vorhergehenden Ansprüche,
**dadurch gekennzeichnet,**
**dass** die Anzeigevorrichtung (10) zum Abruf von Datenbanken, digitalisierten Handbüchern und für den Zugang zum Internet ausgebildet ist.

6. Anzeigevorrichtung nach einem der vorhergehenden Ansprüche,
**dadurch gekennzeichnet,**
**dass** die Anzeigevorrichtung (10) eine Zeitschaltfunktion zur zeitlichen Steuerung der Strombelegung einzelner Stromquellen oder elektrischer Verbraucher des Wohnmobils oder Wohnwagens aufweist.

7. Anzeigevorrichtung nach einem der vorhergehenden Ansprüche,
**dadurch gekennzeichnet,**
**dass** die Anzeigevorrichtung (10) eine Alarmfunktion zur Anzeige kritischer Betriebszustände oder Umgebungsparametern in- oder außerhalb des Wohnmobils oder Wohnwagens aufweist.

8. Anzeigevorrichtung nach Anspruch 7,
**dadurch gekennzeichnet,**
**dass** die Anzeigevorrichtung (10) mit mindestens einem Gas- und/oder Temperatur- und/oder Rauchsensor und/oder mindestens einem Flüssigkeitsmessgerät verbunden ist.

9. Anzeigevorrichtung nach Anspruch 7,
**dadurch gekennzeichnet,**
**dass** die Anzeigevorrichtung (10) einen programmierbaren Tiefentladungsschutz der in dem Wohnmobil oder Wohnwagen angeordneten Stromquellen aufweist.

10. Anzeigevorrichtung nach Anspruch 7,
**dadurch gekennzeichnet,**
**dass** die Anzeigevorrichtung (10) eine Überwachungsanzeige zur Überwachung der Schließstellung von Türen, Fenstern und sonstigen am Wohnmobil oder Wohnwagen ausgebildeten Klappen aufweist.

11. Anzeigevorrichtung nach einem der vorhergehenden Ansprüche,
**dadurch gekennzeichnet,**
**dass** die Anzeigevorrichtung (10) einen Screensaver aufweist.

12. Anzeigevorrichtung nach einem der vorhergehenden Ansprüche,
**dadurch gekennzeichnet,**
**dass** die Anzeigevorrichtung (10) drehbar befestigbar ausgebildet ist.

13. Anzeigevorrichtung nach einem der vorhergehenden Ansprüche,
**dadurch gekennzeichnet,**
**dass die Position und** Orientierung der auf der Anzeigefläche (12) angezeigten Daten, Werte und graphischen Darstellungen einstellbar ist.

14. Anzeigevorrichtung nach einem der vorhergehenden Ansprüche,
**dadurch gekennzeichnet,**
**dass** die Anzeigevorrichtung (10) tragbar ausgebildet ist.

15. Anzeigevorrichtung nach einem der vorhergehenden Ansprüche,
**dadurch gekennzeichnet,**
**dass** die Anzeigevorrichtung (10) und/oder die Anschlussvorrichtung (16) und/oder die Vorrichtung (20) jeweils eine Sende- und/oder Empfangseinheit zur Übertragung und/oder zum Empfang von Daten aufweisen.

16. Anzeigevorrichtung nach einem der vorhergehenden Ansprüche,
**dadurch gekennzeichnet,**
**dass** die Anzeigevorrichtung (10) ein Laptop-Computer, ein PDA-Computer, ein Palm-Computer, ein Handheld-Computer, ein Organizer oder ein tragbares Telefon ist.

17. Anzeigevorrichtung nach einem der vorhergehenden Ansprüche,
**dadurch gekennzeichnet,**
**dass** das Bedienungselement (14) als multifunktioneller Dreh-/Drückschalter ausgebildet ist.

18. Anzeigevorrichtung nach einem der vorhergehenden Ansprüche,
**dadurch gekennzeichnet,**
**dass** die Anzeigefläche (12) ein LCD-Bildschirm ist.
